(19) Europäisches Patentamt / European Patent Office / Office européen des brevets

(11) EP 4 098 438 B1

(12) EUROPEAN PATENT SPECIFICATION

(45) Date of publication and mention of the grant of the patent:
**13.03.2024 Bulletin 2024/11**

(21) Application number: **21747062.4**

(22) Date of filing: **20.01.2021**

(51) International Patent Classification (IPC):
**B32B 5/28** *(2006.01)*   **C08J 5/04** *(2006.01)*
**B29C 43/18** *(2006.01)*   **B29C 43/52** *(2006.01)*
**B29C 43/58** *(2006.01)*   **B29C 70/06** *(2006.01)*
**B29C 70/42** *(2006.01)*   **B29C 70/00** *(2006.01)*
**B29C 70/08** *(2006.01)*   **B29C 70/12** *(2006.01)*
**B29C 70/46** *(2006.01)*   **B29C 70/86** *(2006.01)*
**B29C 70/30** *(2006.01)*   **B29C 43/00** *(2006.01)*
**B29C 43/02** *(2006.01)*   **B29C 70/18** *(2006.01)*
**B32B 3/26** *(2006.01)*   **B32B 7/05** *(2019.01)*
**B32B 27/08** *(2006.01)*   **B32B 27/18** *(2006.01)*
**B32B 27/34** *(2006.01)*   B29K 105/12 *(2006.01)*

(52) Cooperative Patent Classification (CPC):
**B29C 70/18; B29C 43/003; B29C 43/18;
B29C 43/52; B29C 43/58; B29C 70/0035;
B29C 70/08; B29C 70/12; B29C 70/302;
B29C 70/42; B29C 70/46; B32B 3/266; B32B 7/05;
B32B 27/08; B32B 27/18;** (Cont.)

(86) International application number:
**PCT/JP2021/001770**

(87) International publication number:
**WO 2021/153366 (05.08.2021 Gazette 2021/31)**

(54) **COLD PRESS MOLDED BODY CONTAINING CARBON FIBER AND GLASS FIBER, AND MANUFACTURING METHOD THEREOF**

KALTGEPRESSTER KÖRPER, DER KOHLENSTOFF- UND GLASFASERN ENTHÄLT, UND HERSTELLUNGSVERFAHREN DAFÜR

CORPS MOULÉ PAR PRESSAGE À FROID CONTENANT UNE FIBRE DE CARBONE ET UNE FIBRE DE VERRE, ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2020 JP 2020010735**

(43) Date of publication of application:
**07.12.2022 Bulletin 2022/49**

(73) Proprietor: **Teijin Limited
Osaka 530-0005 (JP)**

(72) Inventors:
• **HUA Guofei
Osaka-shi Osaka 530-0005 (JP)**
• **YOKOMIZO Hodaka
Osaka-shi Osaka 530-0005 (JP)**

(74) Representative: **Carpmaels & Ransford LLP
One Southampton Row
London WC1B 5HA (GB)**

(56) References cited:
**JP-A- H 059 301       JP-A- H05 177 654
JP-A- H09 277 420       JP-A- 2013 176 984
US-A1- 2017 008 260**

(52) Cooperative Patent Classification (CPC): (Cont.)
**B32B 27/34; C08J 5/042; C08J 5/043;** B29C 43/02;
B29K 2105/12; B29K 2995/0089; B32B 2250/24;
B32B 2262/101; B32B 2262/106; C08J 2377/02

**Description**

TECHNICAL FIELD

The present invention relates to a cold press molded body containing a carbon fiber and a glass fiber.

BACKGROUND ART

A composite material using a carbon fiber or a glass fiber as a reinforcing material has a high tensile strength, a high tensile modulus, and a small linear expansion coefficient, thus has excellent dimensional stability, also has excellent heat resistance, chemical resistance, fatigue resistance, abrasion resistance, electromagnetic wave shielding properties, and X-ray permeability, and is lighter in weight than a metal material or a ceramic material. Therefore, a fiber reinforced plastic using a carbon fiber or a glass fiber, especially using the former as a reinforcing material in recent years, is widely used in automobiles, sports and leisure, aerospace, and general industrial applications.

For example, Patent Literature 1 describes a laminated structure using a carbon fiber and a glass fiber, as a composite technology of materials for weight reduction, material cost reduction, and improvement of mechanical properties. When different materials having a sandwich structure are used, surface materials and a core material can have different roles, and excellent strength and high rigidity per unit weight can be secured. Such a hybrid material has a feature of improving bending strength and a flexural modulus of a beam or a flat plate by slightly changing elastic moduli of a surface layer and a core layer. A laminated structure of CFRP/GFRP/CFRP can be said to be a typical hybrid structure.

Patent Literature 2 describes a molded body formed by laminating a thermoplastic resin layer reinforced with a glass fiber and a thermoplastic resin reinforced with a carbon fiber.

US2017008260 A1 discloses a molding material used for forming molded product, which has thermoplastic resin layer containing carbon fiber having weighted-mean fiber length of preset value, and other thermoplastic resin layer containing other carbon fiber.

CITATION LIST

PATENT LITERATURE

Patent Literature 1: JP-A-2018-43412
Patent Literature 2: WO 2018/052080

SUMMARY OF INVENTION

TECHNICAL PROBLEM

However, in the invention described in Patent Literature 1, a glass fiber-reinforced resin base material as an intermediate layer is intended for laminating molded products having a complicated shape, and the fastening stability of the molded body has not been studied. Since a carbon fiber base material described in Patent Literature 1 is prepared by a papermaking method and impregnated with a thermoplastic resin, springback at the time of molding is too large.

In the invention described in Patent Literature 2, a ratio of a glass fiber to a carbon fiber in a flowing portion is not examined, and the fastening stability is still insufficient. Further, a carbon fiber resin layer hardly flows because the carbon fiber and the resin are put into a carding machine, defibrated and mixed.

Accordingly, an object of the present invention is to provide a cold press molded body having excellent fastening strength and fastening stability by adjusting a volume, preferably volume resistivity, in an end region (flowing region) using a discontinuous carbon fiber and a discontinuous glass fiber.

SOLUTION TO PROBLEM

In order to solve the above problems, the present invention provides the following solutions.

[1] A cold press molded body, including: a material A containing a discontinuous carbon fiber having a weight average fiber length LwA of 1 mm or more and 100 mm or less, and a thermoplastic resin a; and a material B containing a discontinuous glass fiber and a thermoplastic resin b, the material A and the material B being laminated and satisfying $Va/Vb > Va_{flow}/Vb_{flow}$, wherein:

Va is a volume of the material A contained in the molded body;

Vb is a volume of the material B contained in the molded body;

$Va_{flow}$ is a volume of a flowing region A occupied by the material A in a flowing region of the molded body in an in-plane direction; and

$Vb_{flow}$ is a volume of a flowing region B occupied by the material B in the flowing region of the molded body in the in-plane direction, and

wherein the flowing region is a region formed by the material A and the material B flowed in the in-plane direction of the molded body when the material A and the material B are cold pressed.

[2] The cold press molded body according to [1], wherein an insertion hole is provided in the flowing region and a metal bolt is inserted into the insertion hole.

[3] The cold press molded body according to any one of [2] or [2], wherein volume resistivity of the flowing region is $1.0 \times 10^{12}$ Ω • m or more.

[4] The cold press molded body according to any one of [1] to [3], wherein the thermoplastic resin a and the thermoplastic resin b are the same resin.

[5] The cold press molded body according to any one of [1] to [4], wherein the discontinuous glass fiber has a weight average fiber length LwB of 0.1 mm or more and 100 mm or less.

[6] The cold press molded body according to any one of [1] to [5], satisfying $Va/Vb > (Va_{flow}/Vb_{flow}) \times 10$.

[7] A method for producing a cold press molded body, comprising:

laminating a plate-shaped material A containing a discontinuous carbon fiber having a weight average fiber length LwA of 1 mm or more and 100 mm or less and a thermoplastic resin a, and a material B containing a discontinuous glass fiber and a thermoplastic resin b; and

cold pressing the material A and the material B in a mold to make the material B flow and extend a plane of the material B in an in-plane direction of the material A, wherein

$Va/Vb > Va_{flow}/Vb_{flow}$ is satisfied, wherein:

Va is a volume of the material A contained in the molded body;

Vb is a volume of the material B contained in the molded body;

$Va_{flow}$ is a volume of a flowing region A occupied by the material A in a flowing region of the molded body in an in-plane direction; and

$Vb_{flow}$ is a volume of a flowing region B occupied by the material B in the flowing region of the molded body in the in-plane direction; and wherein the flowing region is a region formed by the material A and the material B flowed in the in-plane direction of the molded body when the material A and the material B are cold pressed.

[8] The method for producing a cold press molded body according to [7], wherein a minimum thickness of the flowing region is smaller than a minimum thickness of a non-flowing region,

wherein the non-flowing region is a region of the cold press molded body nipped between surfaces of the material A or the material B first come into contact with the mold.

[9] The method for producing a cold press molded body according to any one of [7] and [8], wherein a springback amount of the material A is more than 1.0 and less than 14.0.

[10] The method for producing a cold press molded body according to any one of [7] to [9], wherein an insertion hole is provided in the flowing region and a metal bolt is inserted into the insertion hole.

[11] The method for producing a cold press molded body according to any one of [7] to [10], wherein volume resistivity of the flowing region is $1.0 \times 10^{12}$ S2 • m or more.

[12] The method for producing a cold press molded body according to any one of [7] to [11], wherein the thermoplastic resin a and the thermoplastic resin b are the same resin.

[13] The method for producing a cold press molded body according to any one of [7] to [12], wherein the discontinuous glass fiber has a weight average fiber length LwB of 0.1 mm or more and 100 mm or less.

[14] The method for producing a cold press molded body according to any one of [7] to [13], wherein $Va/Vb > (Va_{flow}/Vb_{flow}) \times 10$ is satisfied.

ADVANTAGEOUS EFFECTS OF INVENTION

According to the present invention, volume resistivity of an end region can be adjusted by using a discontinuous carbon fiber and a discontinuous glass fiber, and a fastening strength and fastening stability of the cold press molded body can be improved when a bolt is fastened to the cold press molded body.

BRIEF DESCRIPTION OF DRAWINGS

FIG. 1 is a schematic view of a cold press molded body according to the present invention.
FIG. 2 is a cross-sectional view taken along a line "101-101'" in FIG. 1.
FIG. 3A is a schematic view showing an example of a method for producing a cold press molded body.
FIG. 3B is a schematic view showing an example of the method for producing a cold press molded body.
FIG. 4 is a schematic view in which an insertion hole is provided in a flowing region of the cold press molded body according to the present invention and the cold press molded body is fastened to another member using a metal bolt.
FIG. 5 is a schematic view showing the cold press molded body according to the present invention.
FIG. 6 is a schematic view showing the cold press molded body according to the present invention.
FIG. 7 is a schematic view showing the cold press molded body according to the present invention.
FIG. 8 is a schematic view showing the cold press molded body according to the present invention.
FIG. 9 is a schematic view showing the cold press molded body according to the present invention.
FIG. 10 is a schematic view showing the cold press molded body according to the present invention.
FIG. 11 is a schematic view showing the cold press molded body according to the present invention.
FIG. 12 is a schematic view showing the cold press molded body according to the present invention.
FIG. 13 is a schematic view showing a direction in which a material is made to flow when producing the cold press molded body according to the present invention.
FIG. 14 is a schematic diagram showing a drop weight test.
FIG. 15 is a schematic view showing an example of the cold press molded body.

DESCRIPTION OF EMBODIMENTS

[Carbon Fiber]

1. Carbon Fibers in General

As carbon fibers used in the present invention, polyacrylonitrile (PAN) based carbon fibers, petroleum and coal pitch based carbon fibers, rayon based carbon fibers, cellulose based carbon fibers, lignin based carbon fibers, phenol based carbon fibers, and the like are generally known, but any of these carbon fibers can be suitably used in the present invention. Among these, in the present invention, it is preferable to use polyacrylonitrile (PAN) based carbon fibers from the viewpoint of excellent tensile strength.

2. Sizing Agent for Carbon Fiber

The carbon fibers used in the present invention may have a sizing agent attached to a surface thereof. When the carbon fibers to which a sizing agent is attached is used, a type of the sizing agent can be appropriately selected according to a type of the carbon fibers and a type of a thermoplastic resin used for a material A, and is not particularly limited.

3. Fiber Diameter of Carbon Fiber

A fiber diameter of a single fiber (in general, a single fiber may be referred to as a filament) of the carbon fibers used in the present invention may be appropriately determined depending on the type of the carbon fiber, and is not particularly limited. In general, an average fiber diameter is preferably in a range of 3 $\mu$m to 50 $\mu$m, more preferably in a range of 4 $\mu$m to 12 $\mu$m, and still more preferably in a range of 5 $\mu$m to 8 $\mu$m. When the carbon fibers are in a form of a fiber bundle, the average fiber diameter refers to a diameter of carbon fibers (single fiber) constituting the fiber bundle instead of a diameter of the fiber bundle. The average fiber diameter of the carbon fibers can be measured by, for example, a method described in JIS R7607:2000.

4. Weight Average Fiber Length LwA of Discontinuous Carbon Fibers

The material A in the present invention contains carbon fibers having a weight average fiber length LwA.
The weight average fiber length LwA is 1 mm or more and 100 mm or less, preferably 1 mm or more and 100 mm or less, more preferably 3 mm or more and 80 mm or less, and still more preferably 5 mm or more and 60 mm or less. When the LwA is 100 mm or less, the fluidity of the material A is less likely to decrease, and a cold press molded body having a desired shape is easily obtained. When the LwA is 1 mm or more, the mechanical strength of the obtained cold press molded body is less likely to decrease, which is preferable.

In the present invention, carbon fibers having different fiber lengths may be used in combination. In other words, the carbon fibers used in the present invention may have a single peak or a plurality of peaks in a distribution of the weight average fiber length. In general, the carbon fibers contained in an injection molded body or an extrusion molded body have the weight average fiber length of carbon fibers of less than 1 mm when the carbon fibers are subjected to a sufficient kneading process for uniformly dispersing the carbon fibers in the injection (extrusion) molded body.

5. Method for Measuring Weight Average Fiber Length of Carbon Fibers

In general, an average fiber length of carbon fibers can be determined based on the following formula (1), for example, by measuring fiber lengths of 100 fibers randomly extracted from a molding material (or a molded body) in units of 1 mm using a vernier caliper or the like. The average fiber length can be measured by the weight average fiber length. The number average fiber length and the weight average fiber length are obtained by the following formulae (1) and (2), where a fiber length of each carbon fiber is represented by Li and the number of measured carbon fibers is represented by j.

$$Ln = \Sigma Li/j \qquad \text{Formula (1)}$$

$$Lw = (\Sigma Li^2)/(\Sigma Li) \qquad \text{Formula (2)}$$

When the fiber length is constant, the number average fiber length and the weight average fiber length have the same value.

[Glass Fiber]

1. Average Fiber Diameter

An average fiber diameter of the glass fibers is preferably 1 $\mu$m to 50 $\mu$m, and more preferably 5 $\mu$m to 20 $\mu$m. When the average fiber diameter is too small, it is difficult to impregnate the thermoplastic resin into the fibers, and when the average fiber diameter is too large, moldability and processability are adversely affected.

2. Weight Average Fiber Length of Discontinuous Glass Fibers

A weight average fiber length of the glass fibers used in the present invention is preferably 0.1 mm to 100 mm, more preferably 0.1 mm to 70 mm, still more preferably 0.1 mm to 50 mm, and particularly preferably 0.1 mm to 50 mm.

When the weight average fiber length of the glass fibers is 1 mm or less, the fluidity is excellent, which is preferable. On the other hand, the longer the glass fiber is, the more excellent the mechanical properties of the structural material can be obtained.

In the present invention, discontinuous glass fibers having different fiber lengths may be used in combination. In other words, the discontinuous glass fibers used in the present invention may have a single peak or a plurality of peaks in the distribution of the weight average fiber length.

The weight average fiber length and the number average fiber length of the discontinuous glass fibers can be measured in the same manner as in the above Formulae (1) and (2). A specific measurement method when the fiber length LwB of the discontinuous glass fiber is less than 1 mm will be described later.

3. Sizing Agent

As a sizing agent used for the glass fibers of a material B, a suitable sizing agent can be used as well as the carbon fiber.

[Volume fraction (Vf) of Fibers]

A volume fraction (Vf) of the fibers can be obtained by the following formula (3) for each of the material A containing discontinuous carbon fibers and the material B containing discontinuous glass fibers.

6

$$\text{Volume fraction (Vf) of fibers} = 100 \times \text{Fiber volume/(Fiber volume + Thermoplastic resin volume)} \quad \text{Formula (3)}$$

The volume fraction of the carbon fibers in the material A is not particularly limited, but the volume fraction (Vf) of the carbon fibers is preferably 10 Vol% to 60 Vol%, more preferably 20 Vol% to 50 Vol%, and still more preferably 25 Vol% to 45 Vol%.

The volume fraction of the glass fibers in the material B is not particularly limited, but is preferably 10 Vol% to 60 Vol%, and more preferably 30 Vol% to 50 Vol.

[Fracture Elongation of Fibers]

The fracture elongation (maximum elongation (%)) of the glass fibers is preferably 1% to 10%, and more preferably 2% to 6%. By using the material B containing the glass fibers having the elongation in this range, the impact resistance is improved as compared with a molded body using only the carbon fibers (using only the material A).

[Form of Carbon Fibers Contained in Material A]

1. Bundle Form

The carbon fibers are discontinuous fibers having a fiber length of 5 mm or more, and preferably includes carbon fibers a1 having a fiber bundle of less than 0.3 mm and a carbon fiber bundle a2 having a bundle width of 0.3 mm or more and 3.0 mm or less. A volume fraction of the carbon fiber bundle a2 to the carbon fibers contained in the material A is preferably 5 vol% or more and less than 95 vol%, and more preferably 10 vol% or more and less than 90 vol%.

2. Dispersion

In the material A, the carbon fibers are preferably dispersed in in-plane directions. The in-plane directions are directions orthogonal to a plate thickness direction of the molded body, and mean indefinite directions in a parallel surface orthogonal to the plate thickness direction.

Further, it is preferable that the carbon fibers are randomly dispersed in two-dimensional directions in the in-plane directions. Here, the "randomly dispersed in two-dimension" refers to a state in which the carbon fibers are not oriented in a specific direction such as one direction in the in-plane directions of the molded body, but are oriented in a disordered manner, and are arranged in a sheet surface without exhibiting a specific directivity as a whole. The material A obtained by using the discontinuous fibers randomly dispersed in two-dimension is a substantially isotropic material having no in-plane anisotropy.

A degree of the two-dimensional random orientation is evaluated by determining a ratio of tensile moduli in two directions orthogonal to each other. When a ($E\delta$) ratio obtained by dividing a larger value by a smaller value of tensile moduli measured in an arbitrary direction of the material A and a direction orthogonal to the arbitrary direction is 5 or less, more preferably 2 or less, and still more preferably 1.5 or less, it can be evaluated that the carbon fibers are dispersed two-dimensionally and randomly. Since the molded body has a shape, as a method of evaluating the two-dimensional random dispersion in the in-plane directions, it is preferable to heat the molded body to a softening temperature or higher to return the molded body to a flat plate shape and solidify the molded body. After that, the test piece is cut out, the tensile moduli are obtained, and then a random dispersion state in the two-dimensional directions can be confirmed.

[Fiber Form of Glass Fibers Contained in Material B]

In the material B, the glass fibers are preferably dispersed in in-plane directions. The in-plane directions are directions orthogonal to the plate thickness direction of the molded body, and mean indefinite directions in the parallel surface orthogonal to the plate thickness direction.

Further, it is preferable that the glass fibers are randomly dispersed in the two-dimensional directions in the in-plane directions.

Here, the "randomly dispersed in two-dimension" refers to a state in which the glass fibers are not oriented in a specific direction such as one direction in the in-plane directions of the molded body, but are oriented in a disordered manner, and are arranged in the sheet surface without exhibiting a specific directivity as a whole. The material B obtained by using the discontinuous fibers randomly dispersed two-dimension is a substantially isotropic material B having no in-plane anisotropy.

A degree of the two-dimensional random orientation is evaluated by determining a ratio of tensile moduli in two directions orthogonal to each other. When the (Eδ) ratio obtained by dividing a larger value by a smaller value of tensile moduli measured in an arbitrary direction of the material B and a direction orthogonal to the arbitrary direction is 5 or less, more preferably 2 or less, and still more preferably 1.5 or less, it can be evaluated that the glass fibers are dispersed two-dimensionally and randomly.

[Thermoplastic Resin]

A thermoplastic resin a and a thermoplastic resin b (thermoplastic matrix resin) used in the present invention are not particularly limited, and those having a desired softening point or melting point can be appropriately selected and used. As the thermoplastic resin, a thermoplastic resin having a softening point in a range of 180°C to 350°C is generally used, but the thermoplastic resin is not limited thereto.

Examples of the thermoplastic resin include a polyolefin resin, a polystyrene resin, a polyamide resin, a polyester resin, a polyacetal resin (polyoxymethylene resin), a polycarbonate resin, a (meth)acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyether ketone resin, a thermoplastic urethane resin, fluorine-based resin, and a thermoplastic polybenzimidazole resin.

The thermoplastic resin used in the material A or the material B according to the present invention may be only one kind, or may be two or more kinds. Examples of a mode in which two or more types of thermoplastic resins are used in combination include, but are not limited to, a mode in which thermoplastic resins having different softening points or melting points are used in combination, and a mode in which thermoplastic resins having different average molecular weights are used in combination.

The thermoplastic resin a contained in the material A and the thermoplastic resin b contained in the material B are preferably the same type of thermoplastic resin.

[Other Agent]

The material A or the material B used in the present invention may contain additives such as various fibrous fillers of organic fibers or inorganic fibers or non-fibrous fillers, flame retardants, UV resistant agents, stabilizers, release agents, pigments, softeners, plasticizers, surfactants, and hollow glass beads as long as the objects of the present invention are not impaired.

[Material A]

A method for producing the material A is not particularly limited, but a material containing carbon fibers and a thermoplastic resin can be produced by a method described in, for example, US Patent No. 8946342. Preferably, the material A is an isotropic material, and a production method thereof is described in US Patent No. 8946342.

[Springback Amount of Material A]

In order to perform cold press molding using the material A, it is necessary to soften and melt the material A by preheating and heating the material A to a predetermined temperature. When the thermoplastic resin is plasticized during preheating, the material A containing carbon fibers having a weight average fiber length of 1mm to 100mm (especially the material A containing a mat state in which carbon fibers are deposited) expands due to the springback of the carbon fibers, and a bulk density changes. When the bulk density changes at the time of preheating, the material A becomes porous, a surface area increases, air flows into the material A, and the thermal degradation of the thermoplastic resin is promoted. Here, the springback amount is a value obtained by dividing the plate thickness of the material A after preheating by the plate thickness of the material A before preheating.

When a carbon fiber bundle contained in the material A is highly opened (single-fiber rich) or the fiber length increases, the springback amount tends to increase.

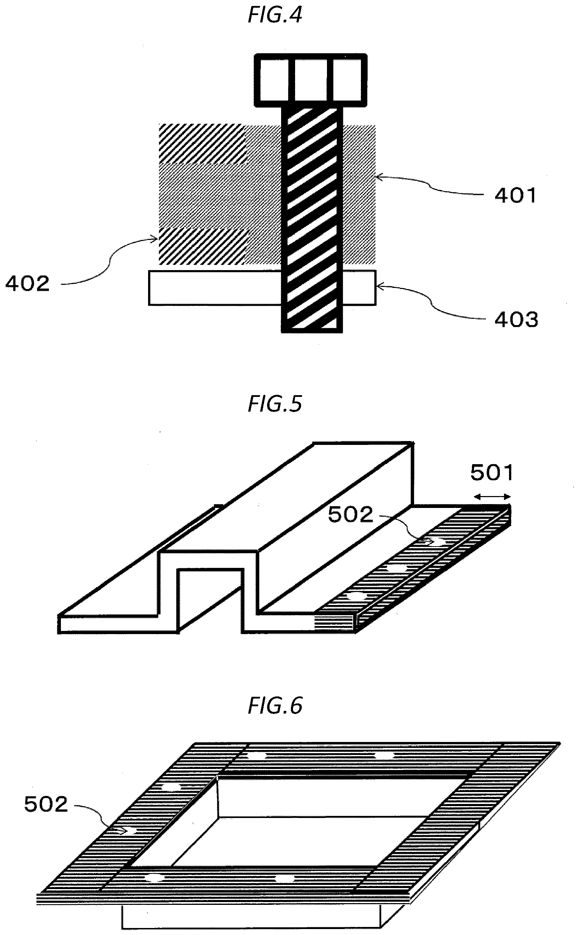

In the present invention, the springback amount of the material A is preferably more than 1.0 and less than 14.0. When the springback amount of the material A is less than 14.0, the material A is less likely to protrude from the mold after the mold is charged with the material A. In particular, as shown in FIG. 5, when a molded body having a hat-shaped cross section is molded, the springback amount is preferably small.

The springback amount of the material A in the present invention is preferably more than 1.0 and 7.0 or less, more preferably more than 1.0 and 5.0 or less, still more preferably more than 1.0 and 3.0 or less, and yet still more preferably more than 1.0 and 2.5 or less.

[Material B]

1. Kneaded Pellet

A method for producing the material B used in the present invention is not particularly limited, and pellets obtained by kneading glass fibers and a thermoplastic resin can be used as the material B.

2. LFT-D Kneaded Material

The material B can also be produced by a long fiber thermoplastic direct in line compound (LFT-D) method.
In the LFT-D method, reinforcing fibers are fed into a kneader together with a thermoplastic resin, and the reinforcing fibers are cut into appropriate lengths by a shear force of a screw while the thermoplastic resin is melt-kneaded to make a LFT-D kneaded material (composite material of the thermoplastic resin and the reinforcing fibers, hereinafter referred to as "compound"). The compound can be used as the material B. The LFT-D method is a method of obtaining a molded product by press molding the compound before the compound is cooled.
More specifically, the LFT-D kneaded material can be produced in accordance with a LFT-D production method described in "In-line compounding and molding of long-fiber reinforced thermoplastics (D-LFT): Insight into a rapid growing technology. ANTEC2004 Conference Proceedings p.3500".

3. Others

A plate-shaped material containing glass fibers and a thermoplastic resin can be produced by the same production method as that of the material A described above (for example, the method described in US Patent No. 8946342), and the plate-shaped material may be used as the material B.

[Relationship between Material and Cold Press Molded Body]

In the present invention, the material A and the material B are formed into a molded body by cold press molding. Therefore, the material A and the material B in the present invention preferably have a flat plate shape. On the other hand, the molded body is shaped into a three-dimensional shape.
When cold pressing is performed using a thermoplastic resin, a form of the reinforcing fibers is substantially maintained before and after molding, and therefore, when the form of the carbon fibers or the glass fibers contained in the molded body is analyzed, it can be understood what the form of the carbon fibers or the glass fibers of the material A or the material B is. In particular, when the material is molded without flowing (non-flowing molding) during cold pressing, the fiber form is substantially unchanged.

[Press Molding]

In the present invention, the material A and the material B may be heated, and the heated material A and material B may be simultaneously pressed in a mold to produce a cold press molded body.

[Cold Pressing]

In general, press molding (also referred to as compression molding) of a material containing reinforcing fibers and a thermoplastic resin can be classified into hot press molding and cold press molding.
In the present invention, the press molding using the cold pressing is particularly preferable. In the cold press method, for example, a fiber reinforced thermoplastic composites (hereinafter, it may be referred to as a collective term for "material A" and "material B") heated to a first predetermined temperature is put into a mold set to a second predetermined temperature, then pressurized and cooled.
Specifically, when the thermoplastic resin a and the thermoplastic resin b are of the same type and are crystalline, the first predetermined temperature is equal to or higher than a melting point, and the second predetermined temperature is lower than the melting point. When the thermoplastic resin a and the thermoplastic resin b are of the same type and are amorphous, the first predetermined temperature is equal to or higher than a glass transition temperature and the second predetermined temperature is lower than the glass transition temperature.
When the thermoplastic resin a and the thermoplastic resin b are different resins, the first predetermined temperature is determined based on the resin having a higher melting point or glass transition temperature, and the second predetermined temperature is determined based on the resin having a lower melting point or glass transition temperature.

That is, the cold press method includes at least the following steps A-1) and A-2).

Step A-1): a step of heating the fiber reinforced thermoplastic composites to a temperature equal to or higher than the melting point and equal to or lower than a degradation temperature when the thermoplastic resin is crystalline, or to a temperature equal to or higher than the glass transition temperature and equal to or lower than the degradation temperature when the thermoplastic resin is amorphous.

Step A-2) a step of placing and pressing the fiber reinforced thermoplastic composites heated in step A-1) in a mold whose temperature is adjusted to be lower than the melting point when the thermoplastic resin is crystalline, or to be lower than the glass transition temperature when the thermoplastic resin is amorphous. By performing these steps, molding of the fiber reinforced thermoplastic composites can be completed (a cold press molded body can be produced).

Each of the steps described above needs to be performed in order described above, but other steps may be included between the steps. Other steps include, for example, prior to step A-2), a shaping step of shaping the fiber reinforced thermoplastic composites in advance into a shape of a cavity of the mold using a shaping mold different from the mold used in the step A-2). Step A-2) is a step of applying pressure to the fiber reinforced thermoplastic composites to obtain a molded body having a desired shape, and a molding pressure at this time is not particularly limited, but is preferably less than 20 MPa, and more preferably 10 MPa or less with respect to a projection area of the cavity of the mold. As a matter of course, various steps may be inserted between the above steps during press molding, and for example, vacuum press molding in which press molding is performed under vacuum may be used.

[Projection Area Charge Ratio]

A projection area charge ratio at the time of cold press molding in the present invention is not particularly limited, and a method of calculating the projection area charge ratio will be described below.

$$\text{Projection area charge ratio (\%)} = 100 \times \text{Projection area of material (mm}^2\text{)/Projection area of cavity of mold (mm}^2\text{)}$$

Here, a projection area of the material refers to a projection area of all the placed materials (including the material A and the material B) in a draft direction, and a projection area of the cavity of the mold refers to a projection area of the mold in the draft direction.

[Flowing Region and Non-flowing Region]

When the molded body is produced by cold pressing with a projection area charge ratio of less than 100%, a flowing region and a non-flowing region can be clearly distinguished from each other. The flowing region and the non-flowing region can be easily determined from a fiber orientation state. In the flowing region, disturbance of the fibers is likely to occur, whereas in the non-flowing region, disturbance of the orientation of the fibers is unlikely to occur. For example, when the carbon fibers and the glass fibers contained in the material A and the material B are dispersed in the in-plane directions, the dispersion in the in-plane directions is maintained in the non-flowing region. On the other hand, in the flowing region, the fibers are oriented in three-dimensional directions, and dispersion in the in-plane directions is not easily maintained. Furthermore, when the molded body is not coated, a color difference of the resin on a surface of the molded body may be observed. In the non-flowing region, a surface of the material becomes the surface of the molded body as it is. Resin degradation is likely to occur on the surface of the material by heating before cold pressing. On the other hand, the surface of the molded body in the flowing region is formed by making the resin inside the material flow. The resin inside the material is less likely to be decomposed by heating before cold pressing. Therefore, there is a difference in the color of the surface of the molded body between the flowing region and the non-flowing region.

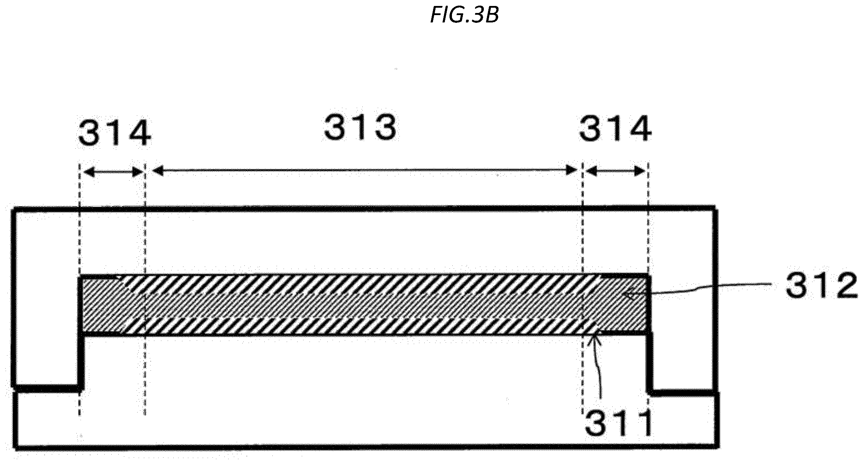

FIG. 3B is a schematic view in which the material A and the material B are laminated in order of A/B/A, and are subjected to cold pressing to perform flow molding.

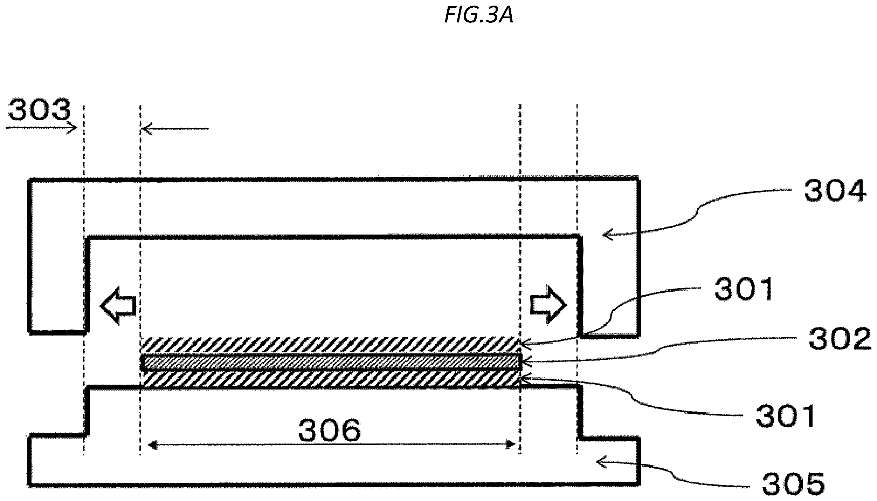

In the case of cold pressing as shown in FIGS. 3A and 3B, since the temperature of the mold is equal to or lower than the softening temperature of the thermoplastic resin, the thermoplastic resin is solidified at the same time when the material A (301) is placed on a lower mold (305) to form a non-flowing surface. Similarly, when an upper mold (304) is lowered to come into contact with the material A (301), the thermoplastic resin is solidified at the same time as the contact to form a non-flowing surface. That is, the non-flowing region is a region nipped by surfaces (non-flowing surfaces) where the material A or the material B first comes into contact with the molds (the upper mold and the lower mold).

On the other hand, the inside of the material is maintained at a plasticizing temperature or higher, the material A and the material B are made to flow due to an increase of a pressing pressure, and the cold press molded body is obtained while forming the flowing region. As shown in FIGS. 3A and 3B, an initially charged range is a non-flowing region (313), and the other region is a flowing region (314). That is, the flowing region is a region formed by making the material A and the material B flow in the in-plane directions of the molded body when performing the cold pressing. When molding is performed with the projection area charge ratio of less than 100%, the flowing region forms an end portion of the cold press molded body.

Even when a volume of the flowing region is reduced by trimming the end portion or the like or performing secondary processing after the cold pressing, the flowing region contained in the cold press molded body after trimming or secondary processing is observed.

In order to describe the flowing region and the non-flowing region, a laminated structure in FIGS. 3A and 3B is set to A/B/A for convenience, but the present invention is not limited thereto.

[Flowing Region A and Flowing Region B in Flowing Region]

In the flowing region in the in-plane directions of the cold press molded body, a region occupied by the material A is referred to as a flowing region A, and a region occupied by the material B is referred to as a flowing region B.

In the cold press molded body, for example, as shown in FIG. 3A, the material A (301) and the material B (302) are arranged and simultaneously pressed to obtain the flowing region A (311) and the flowing region B (312). In the case of pressing as shown in FIG. 3B, the material B, which is easy to flow, is made to flow before the material A. Then, a ratio of the material B becomes relatively large in the flowing region, and a volume ratio $Va_{flow}/Vb_{flow}$ of the material A to the material B in the flowing region becomes smaller than a volume ratio $Va/Vb$ of the material A to the material B contained in the molded body. That is, $Va/Vb > Va_{flow}/Vb_{flow}$ is satisfied. When $Va/Vb > Va_{flow}/Vb_{flow}$, the volume resistivity in the flowing region becomes relatively large, and therefore, when the insertion hole is provided in the flowing region and the metal bolt is inserted into the insertion hole, the problem of electric corrosion can be effectively prevented, and the fastening stability can be improved. $Va/Vb > Va_{flow}/Vb_{flow} \times 10$ is more preferable, and $Va/Vb > Va_{flow}/Vb_{flow} \times 20$ is still more preferable.

More specifically, in at least one flowing region in the in-plane directions of the cold press molded body, the volume ratio of the flowing region A to the flowing region B is $Va_{flow}/Vb_{flow} < 1.0$. $Va_{flow}/Vb_{flow} < 1.0$ means that in the flowing region, the material B has a larger volume ratio than the material A. When $Va_{flow}/Vb_{flow} < 1.0$, the volume resistivity in the flowing region becomes relatively large, and therefore, when the insertion hole is provided in the flowing region and the metal bolt is inserted into the insertion hole, the problem of electric corrosion can be effectively prevented, and the fastening stability can be improved. $Va_{flow}/Vb_{flow} < 0.8$ is more preferable, $Va_{flow}/Vb_{flow} < 0.5$ is still more preferable, and $Va_{flow}/Vb_{flow} < 0.3$ is even more preferable. The flowing region may only contain the material B. When the flowing region only contains the material B, $Va_{flow}/Vb_{flow} = 0$.

[Volume Va of Material A and Volume Vb of Material B]

In the present invention, a volume of the material A is a volume of the material A contained in the cold press molded body, and a volume of the material B is a volume of the material B contained in the cold press molded body. Va and Vb are all volumes of the material A or the material B contained in the cold press molded body regardless of the flowing region and the non-flowing region.

When the volume of the material A or the material B is reduced by trimming the end portion or the like or performing the secondary processing after the cold pressing, the volume of the material A and the material B contained in the cold press molded body after the trimming or the secondary processing is measured.

[Ratio of Volume Va of Material A to Volume Vb of Material B]

$Va:Vb$, which is the ratio of the volume Va of the material A to the volume Vb of the material B contained in the cold press molded body according to the present invention is preferably 10:90 to 50:50, and more preferably 20:80 to 40:60 from the viewpoint of (1) improving fluidity. For example, a main portion of the cold press molded body can be formed using the material A, and only a necessary portion (for example, an end portion, and a narrow portion) can be formed using the material B having high fluidity. $Va:Vb$ is preferably 50:50 to 90:10, and more preferably 60:40 to 80:20 from the viewpoint of (2) weight reduction improvement.

[Laminated Structure of Material]

In the present invention, it is preferable that the material A and the material B are heated, the heated material A and material B are laminated, and simultaneously pressed in a mold. The laminated structure is not limited, and a molding material having a multilayer structure such as A/B, A/B/A, B/A/B, A/B/A/B, and A/B/A/B/A can be used. Here, the simple description of "A" or "B" means a layer of each material. Needless to say, other multilayer structures that are not described herein may be used. Further, not only the material A and the material B but also a material C as other materials may be used, such as A/B/C/A.

In the case of a configuration of A/B/A in which the material A is present on both surfaces and the material B is present in an intermediate layer, the material A is easily cooled and hardly flows because the material A contains carbon fibers. The material B, which is the intermediate layer, is less likely to be cooled than the carbon fiber, and thus easily flows.

In the present invention, in the cold press molded body in which the material A and the material B are laminated, the material A and the material B do not need to be laminated in an entire region of the cold press molded body, and the material A and the material B may be laminated in a part of the cold press molded body. For example, all of the end portions of the cold press molded body may be formed of the material B.

[Volume Resistivity]

The volume resistivity of the flowing region is preferably $1.0 \times 10^{12} \, \Omega \cdot m$ or more, and more preferably $1.0 \times 10^{13} \, \Omega \cdot m$ or more. When the volume resistivity is in this range, the electric corrosion can be effectively prevented when the metal bolt is inserted into the flowing region.

[Insertion of Metal Bolt]

It is preferable that the insertion hole is provided in the flowing region and the metal bolt is inserted into the insertion hole. In the present invention, since a large amount of the material B having a high volume resistivity is contained in the flowing region, the electric corrosion can be prevented. That is, the insertion hole is provided in the flowing region of the cold press molded body in the present invention, the metal bolt is inserted into the insertion hole, and the cold press molded body may be fastened to a member to be fastened to form a fastening body.

[Extending in In-plane Direction]

In production of the cold press molded body according to the present invention, it is preferable that the plate-shaped material A and the plate-shaped material B are laminated, and the cold pressing is performed using the upper mold and the lower mold to make the material B flow and extend a plane of the material B in the in-plane directions of the material A to produce the cold press molded body. The extending means that the material is made to flow and to extend a plane of the material on an extending surface in the in-plane directions of the plate-shaped molding material. The phrase "the cold pressing is performed in the mold to make the material B flow and extend a plane of the material B in the in-plane directions of the material A" means that at least the material B is made to flow and to extend a plane of the material B. At this time, the material A may or may not be made to flow.

In general, the cold press molding is a molding method in which a plate-shaped material is heated, and the heated material is nipped and pressurized between molds to obtain a molded body having a desired shape. When a matrix resin contained in the material is a thermoplastic resin, the material is made to flow during the cold press molding, so that a molded body having a complicated shape can be easily produced.

However, in case of a thermoplastic carbon fiber composite material containing a carbon fiber as the reinforcing fiber contained in the material, the longer the fiber length of the carbon fiber is, the more difficult the carbon fiber is to flow. For example, in a case where an orientation direction of the carbon fiber in the thermoplastic composite material reinforced by the carbon fiber is adjusted for the purpose of improving the performance of the cold press molded body, the orientation direction of the carbon fiber is disturbed when the carbon fiber flows excessively, and the purpose of improving the performance of the cold press molded body to be obtained may not be sufficiently achieved.

On the other hand, when the material A is not made to flow too much, it is difficult to produce a cold press molded body having a complicated shape. Therefore, an ingenuity is required such that a cold press molded body having a desired shape can be obtained without making the thermoplastic composite material (material A) reinforced with carbon fibers to flow much. For example, when the material A to be subjected to press molding is cut out from a raw material base material (composite material containing carbon fibers and a thermoplastic resin), the material A can be cut into a pattern (also referred to as "pattern cut").

By forming at least one end portion of the cold press molded body in the in-plane directions (preferably, an end corner portion in the cold press molded body having the end corner portion in the in-plane directions) with only the material B, occurrence of chipping of the end portion can be prevented (that is, dimensional stability is excellent). This is because the material B containing the glass fibers is more likely to flow than the material A containing the carbon fibers, and thus the material B is made to flow to an end of the mold in the press molding, thereby preventing the occurrence of chipping.

When the weight average fiber length LwB of the discontinuous glass fibers contained in the material B is set to 0.1 mm or more, the generation of burrs at the end portions can be prevented, which is preferable.

[Shape of Cold Press Molded Body]

A shape of the cold press molded body produced by the present invention is not particularly limited. The cold press molded body produced by the present invention preferably has at least one flat portion having at least one thickness (plate thickness), and may have a cross-sectional shape of a T-shape, an L-shape, a U-shape, a hat-shaped shape (hat shape), or a three-dimensional shape including these shapes, and may further have a concave-convex shape (for example, a rib, and a boss).

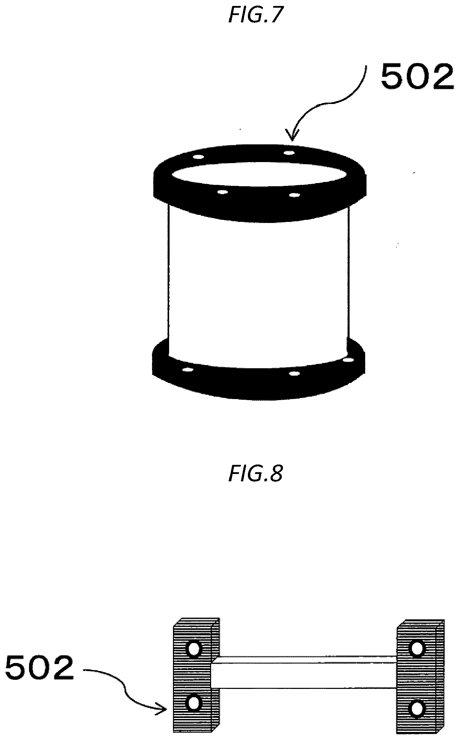

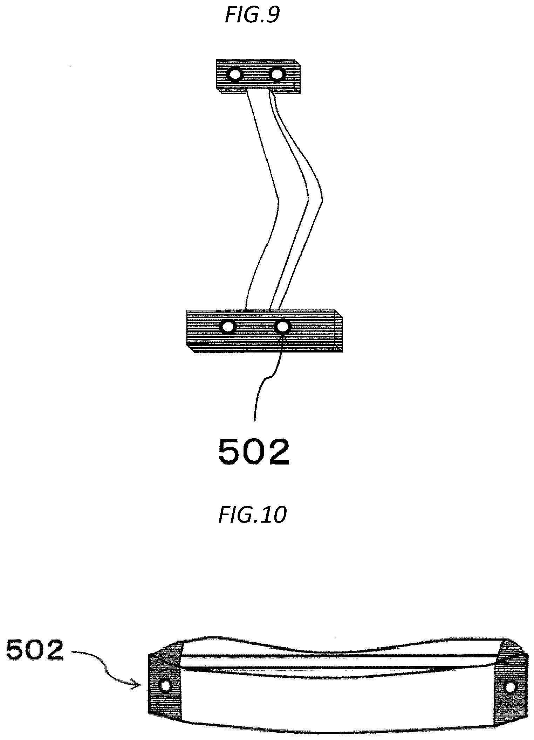

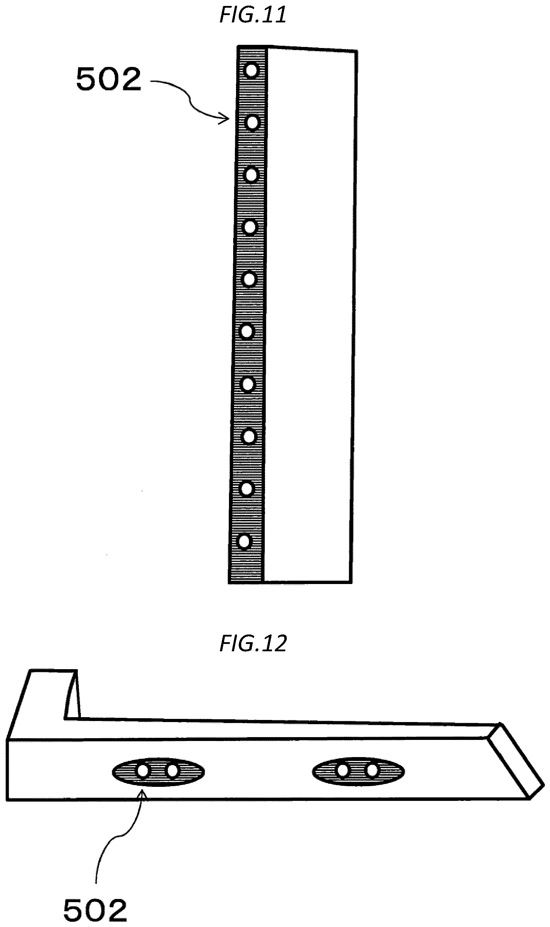

Examples of the cold press molded body produced by the present invention are shown in FIGS. 5 to 12. In each drawing, the flowing region is indicated by hatch lines, and the insertion hole is indicated by (502).

[Minimum Thickness]

In the present invention, it is preferable that a minimum thickness of the flowing region is smaller than a minimum thickness of the non-flowing region. By reducing the thickness of the flowing region, fastening margin of the bolt can be reduced when the cold press molded body is fastened to another member with the metal bolt.

In general, when the cold pressing is performed using only the material A, it is difficult to make the minimum thickness of the flowing region thinner than the minimum thickness of the non-flowing region. Since the temperatures of the upper mold and the lower mold are lower than the softening points of the thermoplastic resins of the heated material A and the heated material B, solidification of the thermoplastic resin proceeds at the same time as the material is made to flow. Thus, the flowing region requires a certain thickness. In the present invention, by using the material A together with the material B that easily flows, the minimum thickness of the flowing region can be made thinner than that of the non-flowing region.

[Example]

Hereinafter, the present invention will be specifically described with reference to Examples, but the present invention is not limited thereto.

1. Raw materials used in the following Production Examples and Examples are as follows. A degradation temperature is a measurement result by thermogravimetric analysis.

(1) Carbon Fiber (PAN based Carbon Fiber)

Carbon fiber "Tenax" (registered trademark) UTS 50-24K (average fiber diameter: 7 $\mu$m, fiber bundle width: 10 mm, density: 1.78 g/cm$^3$) manufactured by Teijin Limited

(2) Glass Fiber

Chopped strand glass fiber; CS3PE-451S manufactured by Nitto Boseki Co., Ltd.

E glass fiber; RS110QL-483 manufactured by Nitto Boseki Co., Ltd.

(3) Polyamide 6: hereinafter, it may be abbreviated as PA6.

Crystalline resin, melting point: 225°C, degradation temperature (in air): 300°C

2. Evaluation Method

2.1 Analysis of Volume fraction (Vf) of Reinforcing Fibers

The material A and the material B were cut out, a thermoplastic resin was burned and removed in a furnace at 500°C for 1 hour, and a mass of a sample was weighed before and after the treatment to calculate masses of the reinforcing fibers and the thermoplastic resin. Next, volume fractions of the reinforcing fibers and the thermoplastic resin were calculated using specific gravities of each component.

$$\text{Vf} = 100 \times \text{Volume of reinforcing fibers/(Volume of reinforcing fibers} + \text{Volume of}$$

$$\text{thermoplastic resin)}$$

## 2.2 Analysis of Weight Average Fiber Length

A weight average fiber length of the reinforcing fibers contained in the material A and the material B are measured in advance by removing the thermoplastic resin in the furnace at 500°C for about 1 hour.

### 2.2.1 Carbon Fibers Contained in Material A

After the thermoplastic resin contained in the material A was removed, a length of 100 carbon fibers randomly extracted were measured and recorded in units of 1 mm with a vernier caliper, and the weight average fiber length (LwA) was determined from the measured lengths (Li, here, an integer of i = 1 to 100) of all carbon fibers by the above formula (2).

### 2.2.2 Glass Fibers B Contained in Material B

Glass fibers having a weight average fiber length of 1 mm or more were measured by the method in 2.2.1, and glass fibers having a weight average fiber length of 1 mm or less were measured by the method in 2.2.2.
After the thermoplastic resin was removed, the obtained glass fibers were put into water containing a surfactant and sufficiently stirred by ultrasonic vibration. The stirred dispersion was randomly collected by a measuring spoon to obtain a sample for evaluation, and the lengths of 3000 fibers were measured by an image analyzer Luzex AP manufactured by Nireco Corporation.
Using measured values of the glass fiber lengths, a number average fiber length LnB and the weight average fiber length LwB were determined in the same manner as in the above formulae (1) and (2).

## 2.3 Observation of Molded Body

A cross section of a flowing region was observed with a microscope, and an area ratio of the material A to the material B was measured. The observations were performed at 10 points in total, and the average was defined as a volume ratio of the flowing region A to the flowing region B. A cross section of an entire molded body was also observed in the same manner as in the flowing region described above, and a volume ratio of the material A to the material B was calculated.

## 2.4 Evaluation of Electric Corrosion

Two molded bodies prepared in Examples and Comparative Examples were prepared, insertion holes having a diameter of 5 mm were provided in the flowing region, and metal (SUS304) bolts were inserted into the insertion holes to fasten the molded bodies.
A surface other than a portion into which the metal bolt was inserted was covered with a PE tape coated with an acrylic adhesive agent exhibiting airtightness and waterproofness, and a composite cycle test (CCT test) was performed. In the CCT test, the following steps were combined to make one cycle (24 hours in total).

· Wet step: 40°C, relative humidity (RH) 95%
· Salt water step: 5 wt% salt water spray, 35°C, RH 90%
· Drying step: 60°C, RH 30%

That is, in the CCT test, first, a molded body into which a metal bolt was inserted was placed on a PP plate and fixed by a double-sided tape. Then, the cycle described above was performed 150 times for the molded bodies in respective Examples and Comparative Examples. An appearance of a region in which the metal bolt was inserted was visually observed.
Excellent: Corrosion hardly proceeds.
Good: Corrosion slightly proceeds.
Poor: Corrosion proceeds severely.

2.5 Evaluation of Impact Absorbency (Drop Weight Test)

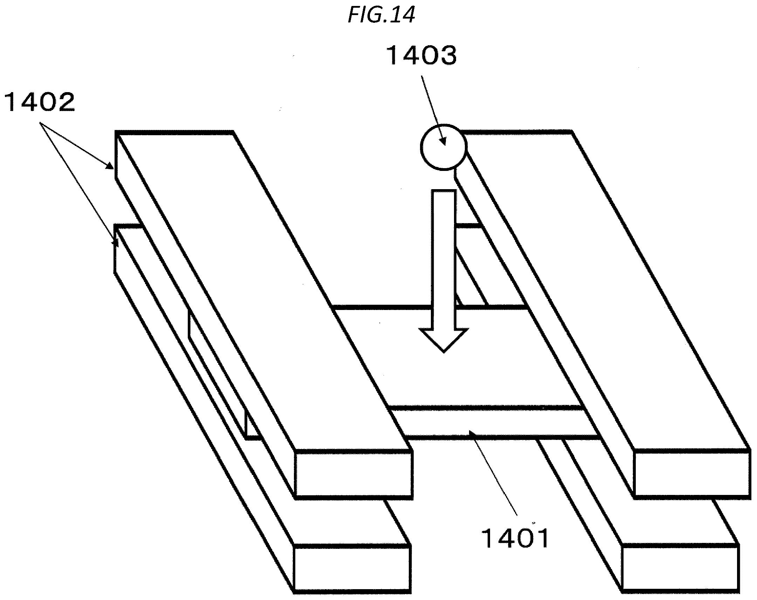

The obtained molded body was cut into a size of width 100 mm × length 200 mm, and as shown in FIG. 14, the molded body was fixed on upper sides of supporting points so that a steel ball was brought into contact with the molded body at a position between the supporting points having a distance of 100 mm, and the steel ball with a load of 500 g was dropped from a height of 4 m to the fixed molded body, and a damaged state of the molded body was visually confirmed.

Excellent: The shape is maintained as a molded body.

Good: Swelling is observed on a rear surface of the impacted surface.

Poor: A crack is observed on the rear surface of the impacted surface.

2.6 Volume Resistivity

The volume resistivity of the flowing region of each of the molded bodies obtained in Examples and Comparative Examples was measured in accordance with JIS-K6911 (1995), which is a measurement standard, by cutting out a sample in a range of 30 mm from a flowing end (the flowing region forms the end of the molded body).

[Example 1]

(Production of Material A)

Carbon fibers "Tenax" (registered trademark) UTS50-24K (average fiber diameter: 7 μm, number of single fibers: 24000) manufactured by Teijin Limited and cut to a fiber length of 20 mm were used as carbon fibers, and a Nylon 6 resin A1030 manufactured by Unitika Ltd. was used as a resin, and a composite material of the carbon fibers and the Nylon 6 resin in which the carbon fibers were randomly oriented in two-dimension was prepared based on a method described in US Patent No. 8946342. The obtained composite material was heated at 2.0 MPa for 5 minutes in a press machine heated to 260°C to obtain the plate-shaped material A having an average thickness of 1.0 mm, a width of 100 mm, and a length of 160 mm. As a result of analysis of the carbon fibers contained in the plate-shaped raw material base material, a volume fraction (Vf) of the carbon fibers was 35%, fiber lengths of the carbon fibers were constant, and a weight average fiber length was 20 mm.

(Production of Material B)

After weighing PA6, PA6 was fed from a main feeder of a TEX30 type twin-screw extruder (LID = 45) which is manufactured by Japan Steel Works Ltd. and in which a cylinder setting temperature was set to a melting point of PA6 +60°C, an exhaust pressure was set to 10 MPa, and a screw rotation speed was set to 160 rpm, and was melt-kneaded. Next, glass fibers (CS3PE-4515) were supplied from a side feeder to a twin-screw extruder so that the volume fraction (Vf) of the glass fibers to PA6 became a ratio shown in Table 1, melt- kneaded, then taken out in a form of strands, cooled, and granulated by a cutter to obtain polyamide resin composition pellets.

(Preparation of Cold Press Molded Body)

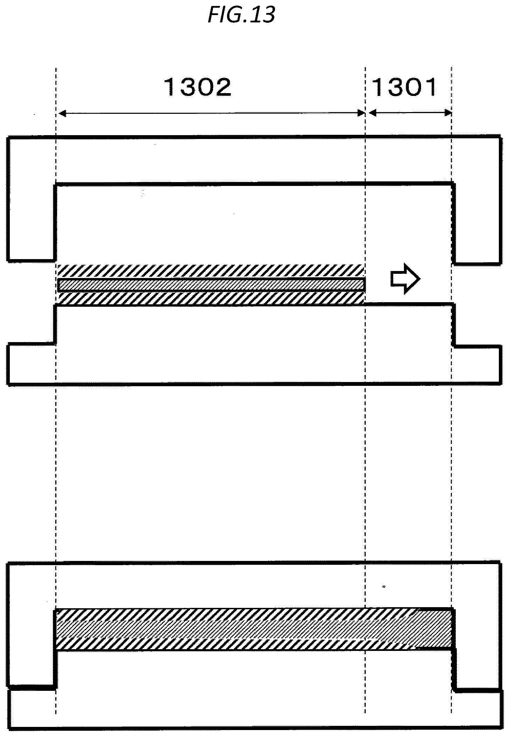

The materials A and the material B were dried in a hot air dryer at 120°C for 4 hours, and then heated to 290°C by an infrared heater, and the materials A and the material B were laminated in order of material A/material B/material A, and as shown in FIG. 13, the materials A and the material B were placed in a lower mold set at 150°C.

At the time of lamination, the material B (pellets) was laminated so as to be 1.25 times the volume fraction of the materials A (two sheets). That is, the material B was laminated so that material A (volume fraction: 100)/material B (volume fraction: 250)/material A (volume fraction: 100) is satisfied.

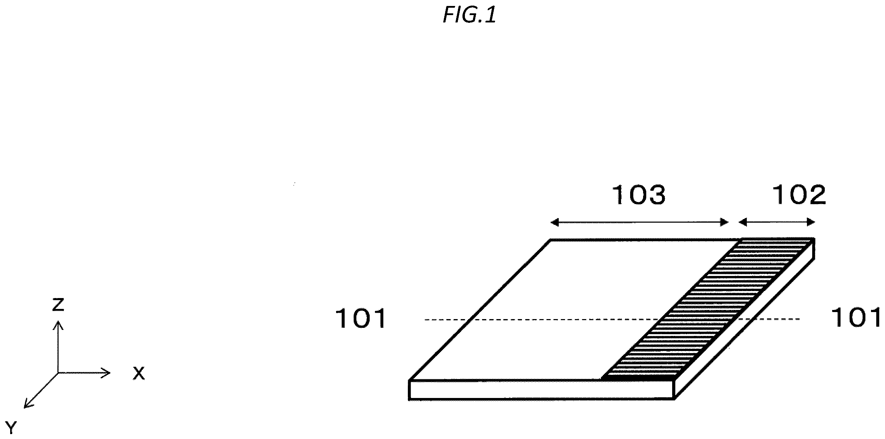

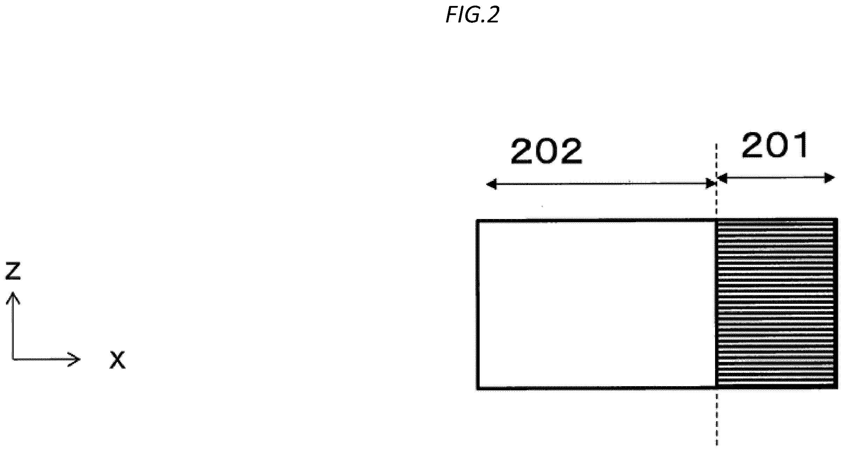

An upper mold was lowered, and the materials A and the material B were pressed at the same time for 1 minute at a pressing pressure of 20 MPa (a time of 1 second from the start of pressing until reaching 20 MPa) to produce a cold press molded body (width 100 mm × length 200 mm) having a shape shown in FIGS. 1 and 2.

As a result of cross-sectional observation, in the flowing region, the flowing region A formed by the material A and the flowing region B formed by the material B were present.

Since the material A was prepared to have a width of 100 mm and a length of 160 mm, and the material B (pellet) was nipped between the materials A and molded, a projection area charge ratio of the material with respect to the molded body was 80%. In addition, 201 in FIG. 2 and 1301 in FIG. 13 are regions formed by flowing (length: 40 mm), and 1302 is a non-flowing region (region charged with the initially material) (length: 160 mm). The results are shown in Table 1.

For confirmation, it will be described that an input amount and the amounts of the material A and the material B in the cold press molded body coincide with each other.

<Input Amount>

Since material A (volume fraction: 100)/material B (volume fraction: 250)/material A (volume fraction: 100) is satisfied, material A ÷ material B = 200 ÷ 250 = 0.8.

<Cold Press Molded Body>

$$\text{Material A} = \text{Non-flowing region} \times 80\% + \text{Flowing region} \times 20\%$$
$$= 55 \times 80\% + 3 \times 20\% = 44.6$$

$$\text{Material B} = \text{Non-flowing region} \times 80\% + \text{Flowing region} \times 20\%$$
$$= 45 \times 80\% + 97 \times 20\% = 55.4$$

Therefore,

$$\text{material A} \div \text{material B} = 44.6 \div 55.4 \approx 0.8.$$

[Example 2]

A molded body was produced in the same manner as in Example 1 except that a fiber volume fraction (Vf) of glass fibers contained in the material B was 30% and an input volume of the material B (pellets) was equal to a volume of the materials A (two sheets). That is, the material B was laminated so that material A (volume fraction: 100)/material B (volume fraction: 200)/material A (volume fraction: 100) is satisfied. The results are shown in Table 1.

[Example 3]

A molded body was produced in the same manner as in Example 2 except that a volume fraction (Vf) of carbon fibers contained in the material A was 25%, a thickness of the material A was 0.7 mm, and a volume fraction (Vf) of glass fibers contained in the material B was 40%. The results are shown in Table 1.

[Example 4]

A molded body was produced in the same manner as in Example 2 except that the material B was prepared as follows. The results are shown in Table 1.
PA6 was melted by a twin-screw kneading extruder, and the melted PA6 was introduced into the twin-screw kneading extruder, and glass fibers (E glass fibers; RS110QL-483, manufactured by Nitto Boseki Co., Ltd., roving) were introduced thereinto and kneaded to prepare a compound, which was used as the material B. A weight average fiber length and a fiber volume fraction of glass fibers contained in the compound are shown in Table 1.
At the time of cold pressing, the material B was laminated so that material A (volume fraction: 100)/material B (volume fraction: 200)/material A (volume fraction: 100) was satisfied in the same manner as in Example 2.

[Example 5]

(Material A)

The material A was prepared in the same manner as in Example 1.

(Material B)

Using E glass fibers; RS110QL-483 manufactured by Nitto Boseki Co., Ltd., roving as glass fibers, and a nylon 6 resin A1030 manufactured by Unitika Ltd. as a resin, a composite material of glass fibers and a nylon 6 resin in which glass fibers were randomly oriented in two-dimension was prepared according to a method described in US patent No. 8946342. The obtained composite material was heated at 2.0 MPa for 5 minutes in a press machine heated to 260°C to obtain the plate-shaped material B having an average thickness of 2.0 mm, a width of 100 mm, and a length of 160 mm. That is, except for the thickness, a size of the material B is the same as that of the material A. The analysis results of the glass fibers contained in the material B are shown in Table 2.

(Preparation of Cold Press Molded Body)

A cold press molded body was produced in the same manner as in Example 2. That is, the material B was laminated so that material A (volume fraction: 100)/material B (volume fraction: 200)/material A (volume fraction: 100) is satisfied. The results are shown in Table 2.

[Examples 6 and 7]

Fiber volume fractions (Vf) of glass fibers contained in the material B were 45% and 50%, respectively. Molded bodies were produced in the same manner as in Example 5, except that a length of each of the material A and the material B was set to 170 mm, the material A and the material B were extended by 10 mm, and press molding was performed so that a charge ratio was 85%. The results are shown in Table 2.

[Example 8]

A molded body was produced in the same manner as in Example 6 except that a weight average fiber length of glass fibers contained in the material B was 8 mm. The results are shown in Table 2.

[Example 9]

A molded body was produced in the same manner as in Example 6 except that a fiber volume fraction (Vf) of carbon fibers contained in the material A was set to 25%. The results are shown in Table 2.

[Example 10]

A molded body was produced in the same manner as in Example 9 except that a fiber volume fraction (Vf) of carbon fibers contained in the material A was set to 35%, a fiber volume fraction (Vf) of the material B was set to 40%, a thickness of the material B was set to 3 mm, a lamination pattern was set to A/B, and the material B was disposed so as to be in contact with a lower mold. That is, a volume fraction of the material A to the material B is material A (volume fraction: 100)/material B (volume fraction: 300). The results are shown in Table 2.

[Comparative Example 1]

A molded body was produced in the same manner as in Example 6 except that the material B was not used and the material A was prepared to have a thickness of 3 mm. The results are shown in Table 2.

[Comparative Example 2]

Press molding was performed in the same manner as in Example 6 except that a thickness of the material A was 1.7 mm, a thickness of the material B was 0.5 mm, and a volume fraction of the materials A and the material B was set to material A (volume fraction: 170)/material B (volume fraction: 50)/material A (volume fraction: 170). Since the material B (intermediate layer) was thinner than the material A, the flowing in a central portion was small, and most of flowing portion was formed of the material A. As a result, $Va/Vb < Va_{flow}/Vb_{flow}$ is satisfied, and electric corrosion evaluation was "poor". The results are shown in Table 2.

[Drop Weight Test]

The molded bodies obtained in Examples 11 to 14 and Comparative Example 3 were subjected to a drop weight test. The test conditions were as follows: a weight mass was set to 16 kg, a height was adjusted so that an impact of 115J and 135J was applied, a side opposite to a surface subjected to the impact was observed, and the following evaluation was performed.

A +: No crack was observed.

A: No crack was observed, but swelling was observed.

B: Cracks of less than 10 mm occurred in an in-plane direction.

C: Cracks of 10 mm or more occurred in an in-plane direction.

[Example 11]

1. Preparation of Material A

Carbon fibers "Tenax" (registered trademark) STS40-24K (average fiber diameter: 7 $\mu$m, number of single fibers: 24.000) manufactured by Toho Tenax Co., Ltd. and cut to a fiber length of 20 mm were used as carbon fibers, and a Nylon 6 resin A1030 manufactured by Unitika Ltd. was used as a resin, and a composite material of carbon fibers and Nylon 6 resin in which carbon fibers were randomly oriented in two-dimension was prepared based on a method described in US Patent No. 8946342. The obtained composite material was heated at 2.0 MPa for 5 minutes in a press machine heated to 260°C to obtain a flat plate-shaped material having an average thickness of 1.0 mm and a size of 390 mm $\times$ 340 mm.

As a result of analysis of the carbon fibers contained in the plate-shaped material, a volume fraction (Vf) of the carbon fibers was 35%, a fiber length of the carbon fibers was a constant length, and a weight average fiber length was 20 mm.

1.2 Preparation of Material B

Using E glass fibers; RS110QL-483 manufactured by Nitto Boseki Co., Ltd., roving as glass fibers, and a nylon 6 resin A1030 manufactured by Unitika Ltd. as a resin, a composite material of glass fibers and a nylon 6 resin in which glass fibers were randomly oriented in two-dimension was prepared according to a method described in US patent No. 8946342. The obtained composite material was heated at 2.0 MPa for 5 minutes in a press machine heated to 260°C to obtain a flat plate-shaped material (two sheets) having an average thickness of 1.5 mm and a size of 390 mm $\times$ 340 mm. When glass fibers contained in the material were analyzed, a glass fiber volume fraction (Vf) was 45%, a fiber length of the glass fibers was a constant length, and a weight average fiber length was 20 mm.

2. Cold Pressing

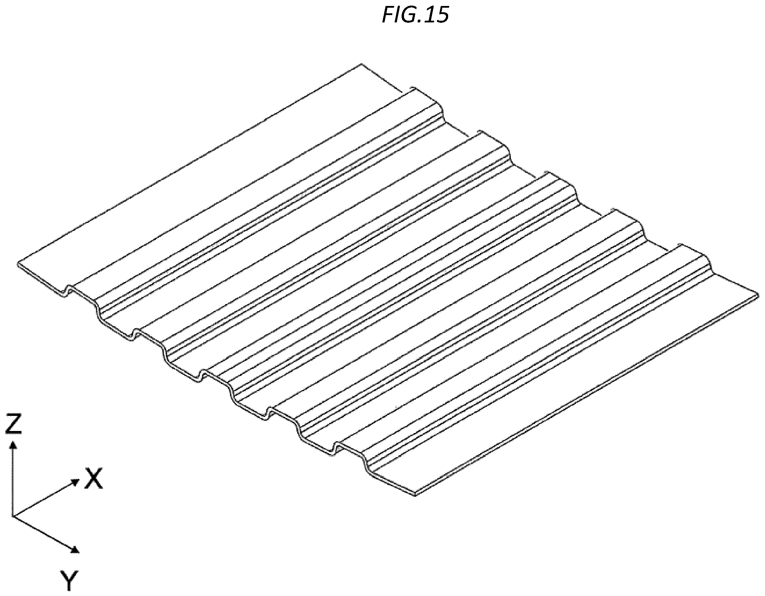

The material A and the material B were dried in a hot air dryer at 120°C for 4 hours, and laminated in order of material B/material A/material B, heated to 290°C by an infrared heater, and pressed at a pressing pressure of 20 MPa for 1 minute to simultaneously press the material A and the materials B, thereby producing a cold press molded body shown in FIG. 15. Lengths in a waving direction (Y-axis direction in FIG. 15) and a direction orthogonal to the waving direction (X-axis direction in FIG. 15) were 400 mm and 350 mm, respectively.

The results are shown in Table 3.

[Example 12]

A molded body was produced in the same manner as in Example 11 except that a thickness of the material A was 1.0 mm, a thickness of the material B was 2.0 mm, and laminated in order of material A/material B/material A. The results are shown in Table 3.

[Example 13]

A thickness of the material A was set to 0.7 mm, a thickness of the material B was set to 1.5 mm, and a material B' was further prepared as follows. A molded body was produced in the same manner as in Example 11 except that the material A, the material B and the material B' were laminated in order of material A/material B'/material A/material B. The material B' was laminated in a volume having a thickness of 1.25 mm if the material B' forms a flat plate. The results are shown in Table 3.

(Production of Material B')

After weighing PA6, PA6 was fed from a main feeder of a TEX30 type twin-screw extruder (LID = 45) which is manufactured by Japan Steel Works Ltd. and in which a cylinder setting temperature was set to a melting point of PA6 +60°C, an exhaust pressure was set to 10 MPa, and a screw rotation speed was set to 160 rpm, and was melt-kneaded.

Next, the glass fibers (CS3PE-451S) were supplied from a side feeder to a twin-screw extruder so that a volume fraction (Vf) of the glass fibers to PA6 is a ratio shown in Table 3, melt-kneaded, then taken out in a form of strands, cooled, and granulated by a cutter to obtain polyamide resin composition pellets.

[Comparative Example 3]

A molded body was produced in the same manner as in Example 11 except that the molded body was produced by using only the material A and laminating two sheets of the material A (material A/material A). The results are shown in Table 3.

[Table 1]

| | | Example 1 | Example 2 | Example 3 | Example 4 |
|---|---|---|---|---|---|
| Material A | Carbon fiber | UTS50 | UTS50 | UTS50 | UTS50 |
| | Weight average fiber length LwA | 20 | 20 | 20 | 20 |
| | Volume fraction (Vf) of fibers | 35 | 35 | 25 | 35 |
| | Thickness mm | 1 | 1 | 0.7 | 1 |
| | Thermoplastic resin | PA6 | PA6 | PA6 | PA6 |
| | Volume resistivity $\Omega \cdot$ m | $1.4 \times 10^{-3}$ | $1.4 \times 10^{-3}$ | $1.5 \times 10^{-3}$ | $1.4 \times 10^{-3}$ |
| Material B | Glass fiber | CS3PE-451S | CS3PE-451S | CS3PE-451S | RS110QL-483 |
| | Weight average fiber length LwB | 0.2 | 0.2 | 0.2 | 0.3 |
| | Volume fraction (Vf) of fibers | 40 | 30 | 40 | 40 |
| | Thickness mm | - | - | - | - |
| | Thermoplastic resin | PA6 | PA6 | PA6 | PA6 |
| | Volume resistivity $\Omega \cdot$ m | $2 \times 10^{13}$ | $2 \times 10^{13}$ | $2 \times 10^{13}$ | $2 \times 10^{13}$ |
| Lamination form | | A/B/A | A/B/A | A/B/A | A/B/A |
| Charge ratio | | 80% | 80% | 80% | 80% |
| Molded body | | | | | |
| Non-flowing region | Volume ratio (%) of material A | 55 | 62 | 50 | 60 |
| | Volume ratio (%) of material B | 45 | 38 | 50 | 40 |
| Flowing region | Volume ratio (%) of flowing region A | 3 | 3 | 2 | 5 |
| | Volume ratio (%) of flowing region B | 97 | 97 | 98 | 95 |
| Evaluation | Evaluation of electric corrosion | Excellent | Excellent | Excellent | Excellent |
| | Drop weight test | good | good | good | good |
| | Volume resistivity $\Omega \cdot$ m of flowing region | $1.9 \times 10^{13}$ or more | $1.9 \times 10^{13}$ or more | $1.9 \times 10^{13}$ or more | $1.9 \times 10^{13}$ or more |
| | Va/Vb | 1.22 | 1.63 | 1.00 | 1.50 |
| | $Va_{flow}/Vb_{flow}$ | 0.03 | 0.03 | 0.02 | 0.05 |

[Table 2]

| | | Example 5 | Example 6 | Example 7 | Example 8 | Example 9 | Example 10 | Comparative Example 1 | Comparative Example 2 |
|---|---|---|---|---|---|---|---|---|---|
| Material A | Carbon fiber | UTS50 | UTS50 | UTS50 | UTS50 | UTS50 | UTS50 | UTS50 | UTS50 |
| | Weight average fiber length LwA | 20 | 20 | 20 | 20 | 20 | 20 | 20 | 20 |
| | Volume fraction (Vf) of fibers | 35 | 35 | 35 | 35 | 25 | 35 | 35 | 35 |
| | Thickness mm | 1 | 1 | 1 | 1 | 1 | 1 | 3 | 1.7 |
| | Thermoplastic resin | PA6 | PA6 | PA6 | PA6 | PA6 | PA6 | PA6 | PA6 |
| | Volume resistivity $\Omega \cdot$ m | $1.4 \times 10^{-3}$ | $1.4 \times 10^{-3}$ | $1.4 \times 10^{-3}$ | $1.4 \times 10^{-3}$ | $1.4 \times 10^{-3}$ | $1.4 \times 10^{-3}$ | $1.4 \times 10^{-3}$ | $1.4 \times 10^{-3}$ |
| Material B | Glass fiber | RS110QL-483 | RS110QL-483 | RS110QL-483 | RS110QL-483 | RS110QL-483 | RS110QL-483 | - | RS110QL-483 |
| | Weight average fiber length LwB | 20 | 20 | 20 | 8 | 20 | 20 | - | 20 |
| | Volume fraction (Vf) of fibers | 30 | 45 | 50 | 45 | 45 | 40 | - | 45 |
| | Thickness mm | 2 | 2 | 2 | 2 | 2 | 3 | - | 0.5 |
| | Thermoplastic resin | PA6 | PA6 | PA6 | PA6 | PA6 | PA6 | - | PA6 |
| | Volume resistivity $\Omega \cdot$ m | $2 \times 10^{13}$ | $2 \times 10^{13}$ | $2 \times 10^{13}$ | $2 \times 10^{13}$ | $2 \times 10^{13}$ | $2 \times 10^{13}$ | - | $2 \times 10^{13}$ |
| Lamination form | | A/B/A | A/B/A | A/B/A | A/B/A | A/B/A | A/B | - | A/B/A |
| Charge ratio | | 80% | 85% | 85% | 85% | 85% | 85% | 85% | 85% |
| Molded body | | | | | | | | | |
| Non-flowing region | Volume ratio (%) of material A | 60 | 58 | 57 | 58 | 57 | 29 | 100 | 86 |
| | Volume ratio (%) of material B | 40 | 42 | 43 | 42 | 43 | 71 | 0 | 14 |
| Flowing region | Volume ratio (%) of flowing region A | 5 | 7 | 10 | 5 | 10 | 3 | 100 | 90 |
| | Volume ratio (%) of flowing region B | 95 | 93 | 90 | 95 | 90 | 97 | 0 | 10 |

(continued)

| Molded body | | | | | | | | | |
|---|---|---|---|---|---|---|---|---|---|
| Evaluation | Evaluation of electric corrosion | Excellent | Excellent | good | Excellent | good | Excellent | poor | poor |
| | Drop weight test | Excellent | Excellent | Excellent | Excellent | Excellent | Excellent | poor | poor |
| | Volume resistivity $\Omega \cdot$ m of flowing region | $1.9 \times 10^{13}$ or | $1.9 \times 10^{13}$ or | $1.5 \times 10^{13}$ or | $1.9 \times 10^{13}$ or | $1.5 \times 10^{13}$ or | $1.9 \times 10^{13}$ or | $1.4 \times 10^{-3}$ | $1.6 \times 10^{-3}$ or less |
| | Va/Vb | 1.50 | 1.38 | 1.33 | 1.38 | 1.33 | 0.41 | - | 6.14 |
| | $Va_{flow}/Vb_{flow}$ | 0.05 | 0.08 | 0.11 | 0.05 | 0.11 | 0.03 | - | 9.00 |

[Table 3]

| | | Example 11 | Example 12 | Example 13 | Comparative Example 3 |
|---|---|---|---|---|---|
| Material A | Carbon fiber | STS40 | STS40 | STS40 | STS40 |
| | Weight average fiber length LwA | 20 | 20 | 20 | 20 |
| | Volume fraction (Vf) of fibers | 35% | 35% | 35% | 35% |
| | Thickness mm | 1.0 | 1.0 | 0.7 | 2.0 |
| | Thermoplastic resin | PA6 | PA6 | PA6 | PA6 |
| Material B | Glass fiber | RS110QL-483 | RS110QL-483 | RS110QL-483 | - |
| | Weight average fiber length LwB | 20 | 20 | 20 | - |
| | Volume fraction (Vf) of fibers | 45 | 45 | 45 | - |
| | Thickness mm | 1.5 | 2.0 | 1.5 | - |
| | Thermoplastic resin | PA6 | PA6 | PA6 | - |
| Material B' | Glass fiber | - | - | CS3PE-451S | - |
| | Weight average fiber length LwB | - | - | 0.2 | - |
| | Volume fraction (Vf) of fibers | - | - | 40 | - |
| | Thickness mm | - | - | | - |
| | Thermoplastic resin | - | - | PA6 | - |
| Lamination form | | B/A/B | A/B/A | A/B7A/B | A/A |
| Charge ratio | | 85% | 85% | 80% | 85% |
| Molded body | | | | | |
| Non-flowing region | Volume ratio (%) of material A | 27 | 58 | 38 | 100 |
| | Volume ratio (%) of material B | 73 | 42 | 62 (Volume ratio of material B and material B') | 0 |
| Flowing region | Volume ratio (%) of flowing region A | 3 | 7 | 2 | 100 |
| | Volume ratio (%) of flowing region B | 97 | 93 | 98 | 0 |
| Evaluation | Va/Vb | 0.37 | 1.38 | 0.61 | - |
| | $Va_{flow}/Vb_{flow}$ | 0.03 | 0.08 | 0.02 | - |
| | Drop weight test 115J | A | B | A+ | C |
| | Drop weight test 135J | B | C | A | C |

INDUSTRIAL APPLICABILITY

A method for producing a cold press molded body according to the present invention can be used for producing a cold press molded body that can be used as any part where impact absorption is desired, such as various constituent members, for example, structural members of automobiles, various electric products, and frames and housings of machines, and particularly preferably as an automobile part.

Although the present invention is described in detail with reference to the specific embodiment, it will be apparent to those skilled in the art that various changes and modifications can be made without departing from the scope of the present invention, as defined by the claims.

REFERENCE SIGNS LIST

101-101' Cross-sectional observation line in FIG. 2
102 Range showing flowing region
103 Range showing non-flowing region
201 Range showing flowing region
202 Range showing non-flowing region
301 Material A
302 Material B
303 Uncharged region
304 Upper mold
305 Lower mold
306 Charged region (become non-flowing region)
311 Flowing region A (region formed by flowing of material A)
312 Flowing region B (region formed by flowing of material B)
313 Non-flowing region
314 Flowing region
401 Flowing region A
402 Flowing region B
403 Other members
501 Flowing region
502 Insertion hole
1301 Uncharged region (flowing region)
1302 Charged region (non-flowing region)
1401 Molded body
1402 Clamp
1403 Steel ball

**Claims**

1. A cold press molded body, comprising:

   a material A (301) containing

      a discontinuous carbon fiber having a weight average fiber length LwA of 1 mm or more and 100 mm or less, and
      a thermoplastic resin a; and

   a material B (302) containing

      a discontinuous glass fiber and
      a thermoplastic resin b,

   the material A and the material B being laminated and satisfying $Va/Vb > Va_{flow}/Vb_{flow}$, wherein:

      Va is a volume of the material A (301) contained in the molded body;
      Vb is a volume of the material B (302) contained in the molded body;
      $Va_{flow}$ is a volume of a flowing region A (311) occupied by the material A (301) in a flowing region (314) of the molded body in an in-plane direction; and
      $Vb_{flow}$ is a volume of a flowing region B (312) occupied by the material B (302) in the flowing region (314) of the molded body in the in-plane direction; and
      wherein the flowing region (314) is a region formed by the material A and the material B flowed in the in-plane direction of the molded body when the material A and the material B are cold pressed.

2. The cold press molded body according to claim 1,

wherein an insertion hole (502) is provided in the flowing region and a metal bolt is inserted into the insertion hole.

3. The cold press molded body according to claim 1 or 2,
   wherein volume resistivity of the flowing region is $1.0 \times 10^{12} \, \Omega \cdot m$ or more.

4. The cold press molded body according to any one of claims 1 to 3,
   wherein the thermoplastic resin a and the thermoplastic resin b are the same resin.

5. The cold press molded body according to any one of claims 1 to 4,
   wherein the discontinuous glass fiber has a weight average fiber length LwB of 0.1 mm or more and 100 mm or less.

6. The cold press molded body according to any one of claims 1 to 5, satisfying $Va/Vb > (Va_{flow}/Vb_{flow}) \times 10$.

7. A method for producing a cold press molded body, comprising:

   laminating a plate-shaped material A (301) containing a discontinuous carbon fiber having a weight average fiber length LwA of 1 mm or more and 100 mm or less and a thermoplastic resin a, and a material B (302) containing a discontinuous glass fiber and a thermoplastic resin b; and
   cold pressing the material A and the material B in a mold to make the material B flow and extend a plane of the material B in an in-plane direction of the material A, wherein

$$Va/Vb > Va_{flow}/Vb_{flow}$$

   is satisfied, wherein:

   Va is a volume of the material A (301) contained in the molded body;
   Vb is a volume of the material B (302) contained in the molded body;
   $Va_{flow}$ is a volume of a flowing region A (311) occupied by the material A (301) in a flowing region (314) of the molded body in an in-plane direction; and
   $Vb_{flow}$ is a volume of a flowing region B (312) occupied by the material B (302) in the flowing region (314) of the molded body in the in-plane direction; and wherein the flowing region (314) is a region formed by the material A (301) and the material B (302) flowed in the in-plane direction of the molded body when the material A (301) and the material B (302) are cold pressed.

8. The method for producing a cold press molded body according to claim 7, wherein a minimum thickness of the flowing region is smaller than a minimum thickness of a non-flowing region, wherein the non-flowing region is a region of the cold press molded body nipped between surfaces of the material A or the material B first come into contact with the mold.

9. The method for producing a cold press molded body according to claim 7 or 8, wherein a springback amount of the material A is more than 1.0 and less than 14.0.

10. The method for producing a cold press molded body according to any one of claims 7 to 9, comprising:

    providing an insertion hole in the flowing region; and
    inserting a metal bolt into the insertion hole.

11. The method for producing a cold press molded body according to any one of claims 7 to 10, wherein volume resistivity of the flowing region is $1.0 \times 10^{12} \, \Omega \cdot m$ or more.

12. The method for producing a cold press molded body according to any one of claims 7 to 11, wherein the thermoplastic resin a and the thermoplastic resin b are the same resin.

13. The method for producing a cold press molded body according to any one of claims 7 to 12,
    wherein the discontinuous glass fiber has a weight average fiber length LwB of 0.1 mm or more and 100 mm or less.

14. The method for producing a cold press molded body according to any one of claims 7 to 13, wherein Va/Vb >

$(Va_{flow}/Vb_{flow}) \times 10$ is satisfied.

**Patentansprüche**

1. Kaltgepresster Formkörper umfassend:

   ein Material A (301) enthaltend
   eine diskontinuierliche Kohlenstofffaser mit einer gewichtsgemittelten Faserlänge LwA von 1 mm oder mehr und 100 mm oder weniger und
   ein thermopastisches Harz a; und
   ein Material B (302) enthaltend
   eine diskontinuierliche Glasfaser und
   ein thermopastisches Harz b,
   wobei das Material A und das Material B laminiert sind und Va/Vb > $Va_{Fließ}/Vb_{Fließ}$ erfüllen, wobei:

   Va ein Volumen des in dem Formkörper enthaltenen Materials A (301) ist;
   Vb ein Volumen des in dem Formkörper enthaltenen Materials B (302) ist;
   $Va_{Fließ}$ ein Volumen eines Fließbereichs A (311) ist, das von dem Material A (301) in einem Fließbereich (314) des Formkörpers in einer Richtung in der Ebene eingenommen wird; und
   $Vb_{Fließ}$ ein Volumen eines Fließbereichs B (312) ist, das von dem Material B (302) in dem Fließbereich (314) des Formkörpers in der Richtung in der Ebene eingenommen wird; und
   wobei der Fließbereich (314) ein Bereich ist, der von dem Material A und dem Material B gebildet wird, die in der Richtung in der Ebene des Formkörpers fließen, wenn das Material A und das Material B kaltgepresst werden.

2. Kaltgepresster Formkörper gemäß Anspruch 1,
   wobei ein Einführloch (502) in dem Fließbereich bereitgestellt ist und ein Metallbolzen in das Einführloch eingeführt ist.

3. Kaltgepresster Formkörper gemäß Anspruch 1 oder 2, wobei der spezifische Volumenwiderstand des Fließbereichs $1,0 \times 10^{12}\,\Omega \cdot m$ oder mehr beträgt.

4. Kaltgepresster Formkörper gemäß einem der Ansprüche 1 bis 3,
   wobei das thermoplastische Harz a und das thermoplastische Harz b das gleiche Harz sind.

5. Kaltgepresster Formkörper gemäß einem der Ansprüche 1 bis 4,
   wobei die diskontinuierliche Glasfaser eine gewichtsgemittelte Faserlänge LwB von 0,1 mm oder mehr und 100 mm oder weniger aufweist.

6. Kaltgepresster Formkörper gemäß einem der Ansprüche 1 bis 5, der Va/Vb > $(Va_{Fließ}/Vb_{Fließ}) \times 10$ erfüllt.

7. Verfahren zur Herstellung eines kaltgepressten Formkörpers, umfassend:

   Laminieren eines plattenförmigen Materials A (301), das eine diskontinuierliche Kohlenstofffaser mit einer gewichtsgemittelten Faserlänge LwA von 1 mm oder mehr und 100 mm oder weniger und ein thermoplastisches Harz a enthält, und eines Materials B (302), das eine diskontinuierliche Glasfaser und ein thermoplastisches Harz b enthält; und
   Kaltpressen des Materials A und des Materials B in einem Formwerkzeug, um das Material B fließen zu lassen und eine Ebene des Materials B in einer Richtung in der Ebene des Materials A zu erweitern, wobei

$$Va/Vb > Va_{Fließ}/Vb_{Fließ}$$

   erfüllt ist, wobei:

   Va ein Volumen des in dem Formkörper enthaltenen Materials A (301) ist;
   Vb ein Volumen des in dem Formkörper enthaltenen Materials B (302) ist;
   $Va_{Fließ}$ ein Volumen eines Fließbereichs A (311) ist, das von dem Material A (301) in einem Fließbereich (314) des Formkörpers in einer Richtung in der Ebene eingenommen wird; und

$Vb_{Fließ}$ ein Volumen eines Fließbereichs B (312) ist, das von dem Material B (302) in dem Fließbereich (314) des Formkörpers in der Richtung in der Ebene eingenommen wird; und wobei der Fließbereich (314) ein Bereich ist, der von dem Material A (301) und dem Material B (302) gebildet wird, die in der Richtung in der Ebene des Formkörpers fließen, wenn das Material A (301) und das Material B (302) kaltgepresst werden.

**8.** Verfahren zur Herstellung eines kaltgepressten Formkörpers gemäß Anspruch 7,

wobei eine kleinste Dicke des Fließbereichs kleiner als eine kleinste Dicke eines Nicht-Fließbereichs ist, wobei der Nicht-Fließbereich ein Bereich des kaltgepressten Formkörpers ist, der zwischen Oberflächen des Materials A oder des Materials B, die zuerst mit dem Formwerkzeug in Kontakt kommen, gefasst ist.

**9.** Verfahren zur Herstellung eines kaltgepressten Formkörpers gemäß Anspruch 7 oder 8, wobei ein Rückfederbetrag des Materials A größer als 1,0 und kleiner als 14,0 ist.

**10.** Verfahren zur Herstellung eines kaltgepressten Formkörpers gemäß einem der Ansprüche 7 bis 9, umfassend: Bereitstellen eines Einführlochs in dem Fließbereich; und Einführen eines Metallbolzens in das Einführloch.

**11.** Verfahren zur Herstellung eines kaltgepressten Formkörpers gemäß einem der Ansprüche 7 bis 10, wobei der spezifische Volumenwiderstand des Fließbereichs $1,0 \times 10^{12}$ Ω • m oder mehr beträgt.

**12.** Verfahren zur Herstellung eines kaltgepressten Formkörpers gemäß einem der Ansprüche 7 bis 11, wobei das thermoplastische Harz a und das thermoplastische Harz b das gleiche Harz sind.

**13.** Verfahren zur Herstellung eines kaltgepressten Formkörpers gemäß einem der Ansprüche 7 bis 12, wobei die diskontinuierliche Glasfaser eine gewichtsgemittelte Faserlänge LwB von 0,1 mm oder mehr und 100 mm oder weniger aufweist.

**14.** Verfahren zur Herstellung eines kaltgepressten Formkörpers gemäß einem der Ansprüche 7 bis 13, wobei Va/Vb > ($Va_{Fließ}/Vb_{Fließ}$) $\times$ 10 erfüllt ist.

## Revendications

**1.** Corps moulé par pressage à froid, comprenant :

un matériau A (301) contenant
une fibre de carbone discontinue ayant une longueur de fibre moyenne en poids LwA de 1 mm ou plus et 100 mm ou moins, et
une résine thermoplastique a ; et
un matériau B (302) contenant
une fibre de verre discontinue, et
une résine thermoplastique b,
le matériau A et le matériau B étant stratifiés et satisfaisant Va/Vb > $Va_{flow}/Vb_{flow}$, dans lequel :

Va est un volume du matériau A (301) contenu dans le corps moulé ;
Vb est un volume du matériau B (302) contenu dans le corps moulé ;
$Va_{flow}$ est un volume d'une région d'écoulement A (311) occupée par le matériau A (301) dans une région d'écoulement (314) du corps moulé dans une direction dans le plan ; et
$Vb_{flow}$ est un volume d'une région d'écoulement B (312) occupée par le matériau B (302) dans la région d'écoulement (314) du corps moulé dans la direction dans le plan ; et
dans lequel la région d'écoulement (314) est une région formée par le matériau A et le matériau B s'écoulant dans la direction dans le plan du corps moulé quand matériau A et le matériau B sont pressés à froid.

**2.** Corps moulé par pressage à froid selon la revendication 1,
dans lequel un trou d'insertion (502) est pratiqué dans la région d'écoulement et un boulon métallique est inséré dans le trou d'insertion.

**3.** Corps moulé par pressage à froid selon la revendication 1 ou 2,
dans lequel la résistivité volumique de la région d'écoulement est de $1,0 \times 10^{12}$ $\Omega \cdot$ m ou plus.

**4.** Corps moulé par pressage à froid selon l'une quelconque des revendications 1 à 3,
dans lequel la résine thermoplastique a et la résine thermoplastique b sont la même résine.

**5.** Corps moulé par pressage à froid selon l'une quelconque des revendications 1 à 4,
dans lequel la fibre de verre discontinue a une longueur de fibre moyenne en poids LwB de 0,1 mm ou plus et 100 mm ou moins.

**6.** Corps moulé par pressage à froid selon l'une quelconque des revendications 1 à 5, satisfaisant Va/Vb > (Va$_{flow}$/Vb$_{flow}$) $\times$ 10.

**7.** Procédé de production d'un corps moulé par pressage à froid, comprenant :

la stratification d'un matériau en forme de plaque A (301) contenant une fibre de carbone discontinue ayant une longueur de fibre moyenne en poids LwA de 1 mm ou plus et 100 mm ou moins et une résine thermoplastique a, et d'un matériau B (302) contenant une fibre de verre discontinue et une résine thermoplastique b ; et
le pressage à froid du matériau A et du matériau B dans un moule pour conduire le matériau B à s'écouler et étendre un plan du matériau B dans une direction dans le plan du matériau A, dans lequel

$$Va/Vb > Va_{flow}/Vb_{flow}$$

est satisfait, dans lequel :

Va est un volume du matériau A (301) contenu dans le corps moulé ;
Vb est un volume du matériau B (302) contenu dans le corps moulé ;
Va$_{flow}$ est un volume d'une région d'écoulement A (311) occupée par le matériau A (301) dans une région d'écoulement (314) du corps moulé dans une direction dans le plan ; et
Vb$_{flow}$ est un volume d'une région d'écoulement B (312) occupée par le matériau B (302) dans la région d'écoulement (314) du corps moulé dans la direction dans le plan ; et dans lequel la région d'écoulement (314) est une région formée par le matériau A (301) et le matériau B (302) s'écoulant dans la direction dans le plan du corps moulé quand le matériau A (301) et le matériau B (302) sont pressés à froid.

**8.** Procédé de production d'un corps moulé par pressage à froid selon la revendication 7,

dans lequel une épaisseur minimale de la région d'écoulement est inférieure à une épaisseur minimale d'une région sans écoulement,
dans lequel la région sans écoulement est une région du corps moulé par pressage à froid coincée entre des surfaces du matériau A ou du matériau B venant d'abord en contact avec le moule.

**9.** Procédé de production d'un corps moulé par pressage à froid selon la revendication 7 ou 8, dans lequel une quantité de retour élastique du matériau A est supérieure à 1,0 et inférieure à 14,0.

**10.** Procédé de production d'un corps moulé par pressage à froid selon l'une quelconque des revendications 7 à 9, comprenant :

la pratique d'un trou d'insertion dans la région d'écoulement ; et
l'insertion d'un boulon métallique dans le trou d'insertion.

**11.** Procédé de production d'un corps moulé par pressage à froid selon l'une quelconque des revendications 7 à 10,
dans lequel la résistivité volumique de la région d'écoulement est de $1,0 \times 10^{12}$ $\Omega \cdot$ m ou plus.

**12.** Procédé de production d'un corps moulé par pressage à froid selon l'une quelconque des revendications 7 à 11,
dans lequel la résine thermoplastique a et la résine thermoplastique b sont la même résine.

**13.** Procédé de production d'un corps moulé par pressage à froid selon l'une quelconque des revendications 7 à 12, dans lequel la fibre de verre discontinue a une longueur de fibre moyenne en poids LwB de 0,1 mm ou plus et 100 mm ou moins.

**14.** Procédé de production d'un corps moulé par pressage à froid selon l'une quelconque des revendications 7 à 13, dans lequel $Va/Vb > (Va_{flow}/Vb_{flow}) \times 10$ est satisfait.

EP 4 098 438 B1

*FIG.1*

FIG.2

*FIG.3A*

EP 4 098 438 B1

*FIG.3B*

EP 4 098 438 B1

## FIG.4

401

402

403

## FIG.5

501

502

## FIG.6

502

FIG.7

502

FIG.8

502

FIG.9

502

FIG.10

502

## FIG.11

502

## FIG.12

502

FIG.13

*FIG.14*

EP 4 098 438 B1

*FIG.15*

## REFERENCES CITED IN THE DESCRIPTION

**Patent documents cited in the description**

- US 2017008260 A1
- JP 2018043412 A
- WO 2018052080 A

- US 8946342 B

**Non-patent literature cited in the description**

- In-line compounding and molding of long-fiber reinforced thermoplastics (D-LFT): Insight into a rapid growing technology. *ANTEC2004 Conference Proceedings,* 3500